(19)

**Europäisches Patentamt**
**European Patent Office**
**Office européen des brevets**

(11) **EP 1 743 142 B1**

(12) **EUROPÄISCHE PATENTSCHRIFT**

(45) Veröffentlichungstag und Bekanntmachung des Hinweises auf die Patenterteilung:
**18.09.2019 Patentblatt 2019/38**

(21) Anmeldenummer: **05744932.4**

(22) Anmeldetag: **04.05.2005**

(51) Int Cl.:
***G01F 1/66*** *(2006.01)*

(86) Internationale Anmeldenummer:
**PCT/EP2005/052058**

(87) Internationale Veröffentlichungsnummer:
**WO 2005/111549 (24.11.2005 Gazette 2005/47)**

(54) **ULTRASCHALL-MESSGERÄT ZUR BESTIMMUNG UND/ODER ÜBERWACHUNG DES VOLUMEN- UND/ODER MASSENDURCHFLUSSES EINES MEDIUMS**

ULTRASONIC MEASURING APPARATUS FOR DETERMINING AND/OR MONITORING THE VOLUME FLOW RATE AND/OR MASS FLOW RATE OF A MEDIUM

DISPOSITIF DE MESURE ULTRASONIQUE POUR DETERMINER ET/OU SURVEILLER LE DEBIT VOLUMIQUE ET/OU MASSIQUE D'UNE SUBSTANCE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **07.05.2004 DE 102004023147**

(43) Veröffentlichungstag der Anmeldung:
**17.01.2007 Patentblatt 2007/03**

(73) Patentinhaber: **Endress+Hauser Flowtec AG**
**4153 Reinach (CH)**

(72) Erfinder:
• **FRÖHLICH, Thomas**
**CH-4142 Münchenstein (CH)**
• **BUSSINGER, Klaus**
**CH-4153 Reinach (CH)**

• **JACOBSEN, Saul**
**CH-4058 Basel (CH)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A- 0 249 691     EP-A- 0 426 309**
**WO-A-00/70313**

• **PATENT ABSTRACTS OF JAPAN Bd. 1997, Nr. 09, 30. September 1997 (1997-09-30) -& JP 09 133562 A (AICHI TOKEI DENKI CO LTD), 20. Mai 1997 (1997-05-20)**

**Beschreibung**

Die Erfindung bezieht sich auf eine Vorrichtung zur Bestimmung und/oder Überwachung des Volumen- und/oder Massendurchflusses eines Mediums, das ein Behältnis in einer Strömungsrichtung durchfließt, mit zumindest einem Ultraschallwandler, der Ultraschall-Messsignale aussendet und/oder empfängt, und mit einer Regel-/Auswerteeinheit, die den Volumen- und/oder den Massendurchfluss des Mediums in dem Behältnis anhand der Ultraschall-Messsignale nach dem Laufzeitdifferenz-Prinzip oder nach dem Doppler-Prinzip ermittelt.

Ultraschall-Durchflussmessgeräte werden vielfach in der Prozess- und Automatisierungstechnik eingesetzt. Sie erlauben es, den Volumen- und/oder Massenstrom eines Mediums in einem Behältnis, insbesondere in einer Rohrleitung berührungslos zu bestimmen.

Die bekannten Ultraschall-Durchflussmessgeräte arbeiten entweder nach dem Doppler-Prinzip oder nach dem Laufzeitdifferenz-Prinzip. Beim Laufzeitdifferenz-Prinzip wird die unterschiedliche Laufzeit von Ultraschall-Mess-signalen in Strömungsrichtung und entgegen der Strömungsrichtung des Mediums ausgewertet. Hierzu werden die Ultraschall-Messsignale von den Ultraschallwandlern wechselweise in Strömungsrichtung und entgegen der Strömungsrichtung des Mediums ausgesendet bzw. empfangen. Anhand der Laufzeitdifferenz der Ultraschall-Messsignale lässt sich die Fließgeschwindig-keit und damit bei bekanntem Durchmesser des Rohres der Volumendurch-fluss bzw. bei bekannter Dichte des Mediums der Massendurchfluss bestimmen.

Beim Doppler-Prinzip werden Ultraschall-Messsignale mit einer vorgegebenen Frequenz in das strömende Medium eingekoppelt. Die in dem Medium reflektierten Ultraschall-Messsignale werden ausgewertet. Anhand einer zwischen dem eingekoppelten und dem reflektierten Ultraschall-Messsignal auftretenden Frequenzverschiebung lässt sich ebenfalls die Fließgeschwindig-keit des Mediums bzw. der Volumen und/oder Massenstrom bestimmen. Der Einsatz von Durchflussmessgeräten, die nach dem Doppler-Prinzip arbeiten, ist nur möglich, wenn in dem Medium Luftbläschen oder Verunreinigungen vorhanden sind, an denen die Ultraschall-Messsignale reflektiert werden. Damit ist der Einsatz derartiger Ultraschall-Durchflussmessgeräte im Vergleich zu den Ultraschall-Durchflussmessgeräten, die nach dem Laufzeitdifferenz-Prinzip arbeiten, ziemlich eingeschränkt.

Hinsichtlich der Typen von Durchflussmessgeräten wird unterschieden zwischen Ultraschall-Durchflussmessgeräten, die in das Rohr eingesetzt werden, und Clamp-On Durchflussmessgeräten, bei denen die Ultraschall-wandler von außen an die Rohrleitung mittels eines Spannverschlusses angepresst werden. Clamp-On Durchflussmessgeräte sind beispielsweise in der EP 0 686 255 B1, der US-PS 4,484,478 oder der US-PS 4,598,593 beschrieben.

Die Schrift WO00/70313 beschreibt einen Gasverbrauchsmesser, welcher bei geringem Gasdurchsatz in einen Modus mit geringem Energieverbrauch versetzt, und welche bei hohem Gasdurchsatz in einen Modus mit höherem Energieverbrauch versetzt.

Die Schrift JPH09133562 schlägt ein batteriebetriebenes Ultraschall-Durchflussmessgerät vor, wobei ein Zeitintervall zwischen der Aussendung eines Ultraschallsignals und dem Empfang des Ultraschallsignals durch einen "reference clock generator 12" bestimmt wird, wobei diesbezüglich eine Anzahl von Takten des "reference clock generators" gezählt wird. Der "reference clock generator" ist zwecks Reduktion des Energieverbrauchs nur während einer notwendigen Zeitphase aktiv geschaltet.

Die Schrift EP0249691A1 schlägt ein Ultraschall-Durchflussmessgerät vor, wobei zur Durchflussmessung eine Phasendifferenzmessmethode zum Einsatz kommt, und wobei Messwandler periodisch gleichzeitig Ultraschallwellenpakete aussenden.

Die Schrift EP0426309A2 schlägt ein Messsystem von Durchflüssen vor, welches Signallaufzeiten von Ultraschallsignalen berechnet, um daraus einen Durchfluss zu bestimmen. Die Signallaufzeiten werden abgeleitet aus einer Phasendifferenz von gegen und mit einer Strömung laufenden Ultraschallsignalen.

Bei beiden Typen von Ultraschall-Durchflussmessgeräten werden die Ultraschall-Messsignale unter einem vorgegebenen Winkel in die Rohrleitung, in der sich das strömende Medium befindet, eingestrahlt und/oder empfangen. Um die Ultraschall-Messsignale unter einem bestimmten Winkel in das Rohr bzw. in das Medium einstrahlen zu können, erfolgt bei Clamp-On Durchfluss-messgeräten die Ein- und Auskopplung der Ultraschall-Messsignale in die Rohrleitung über einen Vorlaufkörper bzw. einen Koppelkeil. Um eine optimale Impedanzanpassung zu erreichen, ist es darüber hinaus bekannt, die Koppelkeile aus einem geeignet brechenden Material, z.B. aus Kunststoff zu fertigen. Hauptbestandteil eines Ultraschallwandlers ist üblicherweise zumindest ein piezoelektrisches Element, welches die Ultraschall-Messsignale erzeugt und/oder empfängt.

Weiterhin stellt es zunehmend in der Prozessautomatisierung eine Anforderung dar, dass Zweileitergeräte zum Einsatz kommen. Zweileitergeräte haben gegenüber Messgeräten, bei denen die Kommunikation zwischen Messgerät und entfernter Kontrollstelle ebenso wie die Energieversorgung des Messgeräts über getrennte Leitungen erfolgen, den Vorteil, dass zumindest eine Leitung bzw. ein Leitungspaar eingespart wird. Durch die Einsparung von Leitungen lassen sich die Kosten und die Installationszeiten erheblich verringern. Darüber hinaus sind Zweileitergeräte aufgrund ihres geringen Energieverbrauchs für den Einsatz in explosionsgefährdeten Bereichen bestens geeignet, was ihre Attraktivität gegenüber Drei- bzw. Vierdrahtgeräten unterstreicht.

Allerdings besteht bei Zweileitergeräten das Problem, trotz erheblich verminderter zur Verfügung stehender Energie den Energiebedarf des Mess-geräts zu decken. Wie bereits gesagt, werden bei Ultraschall-Durchflussmessgeräten die Ultraschall-Messsignale durch das Messmedium gesendet und darüber hinaus bei Clamp-On-Durchflussmessgeräten durch die Rohrwand in das Messmedium eingestrahlt bzw. aus dem Messmedium ausgestrahlt. Aufgrund ungünstiger Impedanzverhältnisse kommt es zu einer starken Schwächung der Ultraschall-Messsignale, so dass die benötigte Verstärkung je nach Anwendung in der Großenordnung von 20-120dB liegt. Die Frequenz der Ultraschall-Messsignale liegt zwischen ca. 100kHz und 10MHz. Elektro-nische Komponenten, die in diesem Frequenzbereich arbeiten, benötigen bekanntlich relativ viel Strom, was dem Einsatz der Zweileitertechnik bei Ultraschall-Durchflussmessgeräten entgegensteht.

Der Erfindung liegt die Aufgabe zugrunde, eine Vorrichtung zur Durchfluss-messung bevorzugt in Zweileitertechnik vorzuschlagen, die sich durch eine optimierten Stromverbrauch bzw. durch einen relativ geringen Leistungsverbrauch auszeichnet.

Die Aufgabe wird durch die im Anspruch 1 angeführten Merkmale gelöst.

Die Zeitdauer für eine Messphase ist daher variabel und wird beispielsweise so bestimmt, dass sie bevorzugt optimal auf die zur Verfügung stehende Energie abgestimmt ist.

Gemäß einer alternativen Ausgestaltung der Erfindung wird zur Lösung der Aufgabe vorgeschlagen, dass erste Taktgeber mit einer ersten Taktrate und der zweite Taktgeber mit einer zweiten Taktrate arbeitet, wobei die erste Taktrate des ersten Taktgebers größer ist als die zweite Taktrate des zweiten Taktgebers, und dass die Taktrate des ersten Taktgebers so ausgelegt ist, dass die zum Betreiben der Vorrichtung erforderliche minimale Energie während der Einschaltphase bzw. Messphase zur Verfügung steht. In diesem Fall ist die Taktrate des ersten Taktgeber gleichfalls konstant.

Die zuvor genannten Ausgestaltungen der Erfindung basieren darauf, dass ein wesentlicher Teil des Stroms auf dem Verstärker eines Ultraschall-Durchflussmessgeräts durch die Regel-/Auswerteeinheit und den dazuge-hörigen, schnellen Taktgeber bzw. Oszillator verbraucht wird. Damit die Regel-/Auswerteeinheit korrekt funktioniert, muss sie fortlaufend getaktet werden. Die Regel-/Auswerteeinheit besteht aus einer Kombination von einem Mikroprozessor und einer Logik. Dieser Regel-/Auswerteeinheit sind zwei Taktgeber zugeordnet: Der erste Taktgeber ist ein schneller Taktgeber, der einen höheren Stromverbrauch als der langsame zweite Taktgeber hat. Dieser schnelle Taktgeber wird benötigt für die Laufzeitmessung, das Abtasten der Ultraschall-Messsignale, das Laden der Daten in eine Speichereinheit, die Berechnung des Durchflusses durch das Messrohr, usw.

Der zweite Taktgeber ist ein relativ langsamer Taktgeber, der einen geringeren Stromverbrauch wie der erste schnelle Taktgeber hat. Dieser Taktgeber wird als Stand-by Taktgeber benötigt. In dem Zeitraum, in dem der schnelle Taktgeber mit dem hohen Stromverbrauch nicht benötigt wird, wird dieser erfindungsgemäß deaktiviert. Nun läuft die Regel-/Auswerteeinheit nur noch getaktet vom langsamen Taktgeber. Befindet sich die Regel-/Auswerte-einheit im Stand-by Modus, verbraucht sie somit weniger Strom. Sobald der schnelle Taktgeber wieder benötigt wird, wird er wieder aktiviert.

Vorteilhafte Weiterbildungen der erfindungsgemäßen Vorrichtung schlagen vor, dass es sich bei dem Durchflussmessgerät um ein Clamp-On Durchfluss-messgerät oder um ein Messgerät handelt, das in das Behältnis einbringbar ist.

Als vorteilhaft hat sich die Konstellation erwiesen, dass es sich bei dem ersten Taktgeber um einen Oszillator handelt. Für den zweiten Taktgeber wird bevorzugt ein Quarz, z.B. ein Uhrenquarz eingesetzt. Dies stellt eine kostengünstige Lösung dar.

Insbesondere ist darüber hinaus vorgesehen, dass die Regel-/Auswerteeinheit den zweiten Taktgeber intermittierend betreibt. Allerdings ist es auch durchaus möglich, dass der zweite Taktgeber kontinuierlich betrieben ist, da er aufgrund seiner geringen Taktrate einen relativ geringen Energieverbrauch hat.

Eine vorteilhafte Ausgestaltung der erfindungsgemäßen Vorrichtung sieht einen Stromsensor vor, der der Regel-/Auswerteinheit Information über den in einem vorgegebenen Zeitpunkt zur Verfügung stehenden Strom liefert. Möglich ist es darüber hinaus, den Strom aus der Messgröße heraus zu bestimmen. Weiterhin ist vorgesehen, dass die Regel-/Auswerteeinheit die Zeitdauer der Mess- und/oder der Ruhephase des ersten Taktgebers und/oder des zweiten Taktgebers anhand des in dem vorgegebenen Zeitpunkt zur Verfügung stehenden Stroms bestimmt.

Die Erfindung wird anhand der nachfolgenden Figuren näher erläutert. Es zeigt:

Fig. 1: eine schematische Darstellung einer Ausgestaltung der erfindungs-gemäßen Vorrichtung,
Fig. 2: ein Blockschaltbild zur Ansteuerung der erfindungsgemäßen Vorrichtung,
Fig. 3: Laufzeitdiagramme

1. des ersten Taktgebers
2. des zweiten Taktgeber
3. des Disable-Signals und

Fig. 4: ein Flussdiagramm zur Ansteuerung der Regel-/Auswerteeinheit, die in der erfindungsgemäßen Vorrichtung eingesetzt wird.

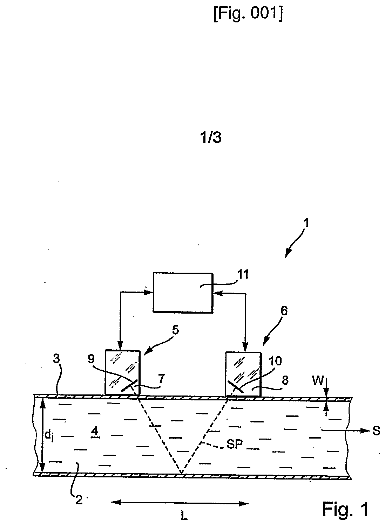

Fig. 1 zeigt eine schematische Darstellung einer Ausgestaltung des erfindungsgemäßen Ultraschall-Durchflussmessgeräts 1. Bei dem Messgerät 1 handelt es sich um ein Clamp-On Durchflussmessgerät. Im gezeigten Fall ermittelt das Messgerät 1 den Volumendurchfluss bzw. den Massendurchfluss des Mediums 4 nach der bekannten Laufzeitdifferenz-Methode.

Wesentliche Komponenten des Clamp-On Ultraschall-Durchflussmessgerätes 1 sind die beiden Ultraschallwandler 5, 6 und die Regel-/Auswerteeinheit 11. Die beiden Ultraschallwandler 5, 6 sind mittels einer in der Fig. 1 nicht gesondert dargestellten Befestigungsvorrichtung in einem Abstand L voneinander an dem Rohr 2 angebracht. Entsprechende Befestigungs-vorrichtungen sind aus dem Stand der Technik hinlänglich bekannt und werden auch von der Anmelderin angeboten und vertrieben. Das Rohr 2 mit dem Innendurchmesser $di$ wird von dem Medium 4 in Strömungsrichtung S.

Ein Ultraschallwandler 5; 6 weist als wesentlichen Bestandteil zumindest ein piezoelektrisches Element 9; 10, das die Ultraschall-Messsignale erzeugt und/oder empfängt. Die Ultraschall-Messsignale werden über den Koppelkeil 7; 8 in das vom Medium 4 durchströmte Rohr 2 eingekoppelt bzw. aus dem Rohr 2 ausgekoppelt. Ein Koppelkeil 7; 8 ist in bekannter Weise so ausge-staltet, dass sich eine möglichst gute Impedanzanpassung beim Übergang von einem Medium in das andere realisieren lässt. Mit SP ist übrigens der Schallpfad gekennzeichnet, auf dem sich die Ultraschall-Messsignale in dem Rohr 2 bzw. in dem Medium 4 ausbreiten. Im gezeigten Fall handelt es sich um eine sog. Zwei-Traversenanordnung der Ultraschallwandler 5, 6. Eine Traverse kennzeichnet dabei den Teilbereich des Schallpfades SP, auf dem ein Ultraschall-Messsignal den Behälter 2 einmal quert. Die Traversen können je nach Anordnung der Ultraschallwandler 5, 6 und ggf. unter Einfügen eines Reflektorelements in den Schallpfad SP diametral oder chordial verlaufen.

Der Abstand L der beiden Ultraschallwandler 5, 6 ist möglichst so bemessen, dass ein großer Anteil der von dem jeweils einen Ultraschallwandler 5; 6 in das Rohr 2 eingestrahlten Energie von dem jeweils anderen Ultraschallwandler 6; 5 empfangen wird. Der optimale Abstand L der beiden Ultraschall-wandler 5, 6 ist von mehreren System- und Prozessgrößen abhängig. Sind diese Größen bekannt, so läßt sich der optimale Abstand L der Ultraschall-wandler 5; 6 über die Laufzeit der Ultraschall-Messsignale hochgenau berechnen. Bei der Berechnung kommt das Gesetz von Snellius in bekannter Weise zur Anwendung. Bei den System- und Prozessgrössen handelt es sich insbesondere um den Innendurchmesser $di$ des Rohres 2, um die Dicke w der Rohrwand 3, um die Schallgeschwindigkeit $cr$ des Materials, aus dem das Rohr 2 gefertigt ist, oder um die Schallgeschwindigkeit c des Mediums 4.

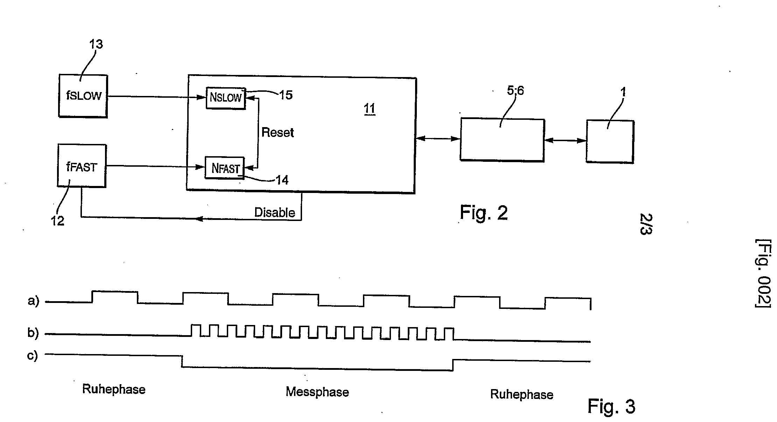

Fig. 2 zeigt ein Blockschaltbild zur Ansteuerung der erfindungsgemäßen Vorrichtung 1. In den Figuren Fig. 3a, Fig. 3b, Fig. 3c sind die Laufzeit-diagramme des ersten Taktgebers 12, des zweiten Taktgebers 13 und des Disable-Signals, mit dem die Regel-/Auswerteeinheit 11 den ersten Taktgeber 12 ein- und ausschaltet, dargestellt. Während der erste Taktgeber 12 inter-mittierend betrieben wird, arbeitet der zweite Taktgeber 13 im gezeigten Fall kontinuierlich. Dem ersten Taktgeber 12 ist ein Zähler 14 und dem zweiten Taktgeber 13 ein Zähler 15 zugeordnet.

Wie bereits zuvor erwähnt, wird ein wesentlicher Teil des Stroms I auf dem Verstärker eines Ultraschall-Durchflussmessgeräts 1 durch die Regel-/Auswerteeinheit 11 und den dazugehörigen, schnellen Oszillator -hier den Taktgeber 12 - verbraucht. Damit die Regel-/Auswerteeinheit 11 korrekt arbeitet, muss sie fortlaufend getaktet werden. Die Regel-/Auswerteeinheit 11 besteht aus einer Kombination von einem Mikroprozessor und einer Logik. Dieser Regel-/Auswerteeinheit 11 sind die beiden Taktgeber 12, 13 zugeordnet: Der erste Taktgeber 12 mit einer hohen Taktrate fFast wird u.a. für die Laufzeitmessung, das Abtasten der Ultraschall-Messsignale, das Laden der gemessenen Daten in eine Speichereinheit und die Berechnung des Durchflusses des Mediums 4 durch das Messrohr 2 benötigt.

Der zweite Taktgeber 13 mit dem langsameren Takt fSlow hat einen geringeren Stromverbrauch wie der erste schnelle Taktgeber 12. Der Taktgeber 13 wird als Stand-by Taktgeber benötigt. Der schnelle Taktgeber 12 mit dem hohen Stromverbrauch wird für den Zeitraum, in dem er nicht benötigt wird (→ Ruhephase), erfindungsgemäß deaktiviert. Nun läuft die Regel-/Auswerteeinheit 11 nur noch getaktet von dem Taktgeber 13 mit der langsameren Taktrate fSlow. Befindet sich die Regel-/Auswerteeinheit 11 in diesem Stand-by Modus, verbraucht sie relativ wenig Strom I. Sobald der Taktgeber 12 mit der hohen Taktrate fFast wieder benötigt wird bzw. sobald ausreichend Leistung für den Betrieb des Ultraschall-Durchflussmessgeräts 1 zur Verfügung steht, wird der erste Taktgeber 12 mit der hohen Taktrate fFast wieder aktiviert.

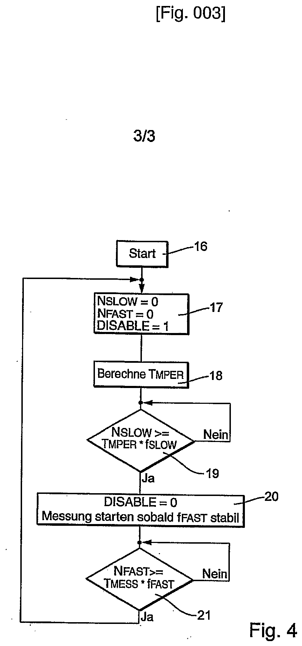

In Fig. 4 ist ein Flussdiagramm zur Ansteuerung der Regel-/Auswerteeinheit 11 zu sehen, die in der erfindungsgemäßen Vorrichtung 1 eingesetzt wird. Insbesondere ist in Fig. 4 dargestellt, wann welcher Taktgeber 12, 13 verwendet wird, bzw. was die Kriterien sind, damit von einem Taktgeber 12; 13 auf den anderen Taktgeber 13; 12 umgeschaltet wird.

Das Programm wird im Punkt 16 gestartet. Unter dem Programmpunkt 17 wird der erste Zähler 14 auf den Zählerstand NFast = 0 gesetzt. Der schnelle Taktgeber 12 mit der Taktfrequenz fFast wird, da Disable auf 1 gesetzt ist, abgeschaltet. Ebenso wird der zweite Zähler 15 auf den Zählerstand NSlow = 0 gesetzt. Anschließend wir die Zeitdauer Tmper für die Messphase von der Regel-/Auswerteeinheit 11 vorgegeben. Die Vorgabe bzw. die Berechnung der Zeitdauer Tmpr einer Messphase kann auf mindestens zwei Arten bestimmt werden:

1. Die Zeitdauer Tmper der Messphase ist konstant (Tmper = const.). Die Zeitdauer Tmper der Messphase bzw. die Messperiode ist so gewählt, dass die zur Verfügung stehende minimale Leistung nie überschritten wird.

2. Die Zeitdauer Tmper der Messphase ist variabel und wird jeweils in Abhängigkeit von der zur Verfügung stehenden Leistung optimal vorausberechnet bzw. vorgegeben. Die zur Verfügung stehende Energie ist abhängig von dem Wert der aktuellen Messgröße. Bei der aktuellen Meßgröße handelt es sich beispielsweise um den Durchfluss. Da z. B. in der 4-20mA Technik einem gemessenen Durchflusswert ein definierter Stromwert entspricht, ist der zur Verfügung stehende Strom bekannt bzw. lässt sich nach folgender Formel berechnen:

$$\text{Strom I} = 4\text{mA} + (\text{Meßgröße} * 16\text{mA})) / \text{Endwert}$$

Somit ist 1/Tmper = f(I), wobei F eine monoton steigende Funktion ist. Folglich ist die Meßperiode bzw. die Zeitdauer Tmper einer Messphase um so kleiner, je größer der Strom I ist. Die Berechnung des Stroms I und damit der aktuellen zur Verfügung stehenden Energie erfolgt unter dem Programm-punkt 18. Selbstverständlich ist es auch möglich, die Energie in einem Energiespeicherelement zu speichern. Die Regel-/Auswerteeinheit 11 leitet die nachfolgende Messphase ein, sobald die erforderliche Energie für die nächste Messphase zur Verfügung steht.

Unter Punkt 19 vergleicht das Programm, ob der Zählerstand NSlow des Zählers 15, der dem langsamen Taktgeber 13 zugeordnet ist, größer ist als TMper * fSlow. Sobald der vorgegebene Zählerstand erreicht ist, springt das Programm auf den Programmpunkt 20 und aktiviert den schnellen Taktgeber 12. Sobald der schnelle Taktgeber stabil arbeitet, kann die nächste Messphase starten. Während der Messzeit TMess ist der Zähler 15 aktiviert. Die Messung muss beendet sein, wenn der Zählerstand NSlow des Zählers 15 größer ist als TMess * fFast. Diese Überprüfung erfolgt unter dem Programmpunkt 21. Ist die vorgenannte Bedingung erfüllt, so wird der schnelle Taktgeber 12 wieder deaktiviert, und das Programm springt in einer Schleife auf den Programmpunkt 17 zurück.

**Bezugszeichenliste**

Ultraschall-Durchflussmessgerät
Rohrleitung / Behältnis
Rohrwand
Medium
Ultraschallwandler
Ultraschallwandler
Koppelkeil
Koppelkeil
Piezoelektrisches Element
Piezoelektrisches Element
Regel-/Auswerteeinheit
Erster Taktgeber
Zweiter Taktgeber
Erster Zähler
Zweiter Zähler

**Patentansprüche**

1. Vorrichtung zur Bestimmung und/oder Überwachung des Volumen- und/ oder Massendurchflusses eines Mediums (4), das ein Behältnis (2) in einer Strömungsrichtung (S) durchfließt, mit zumindest einem Ultraschallwandler (5, 6), der Ultraschall-Messsignale aussendet und/oder empfängt, und mit einer Regel-/Auswerteeinheit (11), die den Volumen- und/oder den Massedurch-fluss des Mediums (4) in dem Behältnis (2) anhand der Ultraschall-Messsignale nach dem Laufzeitdifferenz-Prinzip oder nach dem Doppler-Prinzip ermittelt, wobei ein erster Taktgeber (12) mit einer ersten Taktrate (fFast) und ein zweiter Taktgeber (13) mit einer zweiten Taktrate (fSlow) vorgesehen sind, wobei die erste Taktrate (fFast) des ersten Taktgebers (12) größer ist als die zweite Taktrate (fSlow) des zweiten Taktgebers (13), und wobei

die Regel-/Auswerteeinheit (11) dazu eingerichtet ist, den ersten Taktgeber (12) inter-mittierend zu betreiben und wobei die Regel-/Auswerteeinheit (11) für das Abtasten der Ultraschall-Messsignale für eine Laufzeitmessung sowie eine Berechnung des Durchflusses des Mediums mit der ersten Taktrate getaktet ist, und wobei in einer Ruhephase die Regel-/Auswerteeinheit (11) mit der zweiten Taktrate getaktet ist, wobei der erste Taktgeber während der Ruhephase deaktiviert ist,

**dadurch gekennzeichnet,**

**dass**

die Regel-/Auswerteeinheit (11) dazu eingerichtet ist, die Zeitdauer einer Einschalt- bzw. Messphase und/oder der Ruhephase in Abhängigkeit von einer zur Verfügung stehenden Energie zu bemessen, wobei die erste Taktrate für (fFast) das Abtasten der Ultraschall-Messignale für eine Laufzeitmessung sowie eine Berechnung des Durchflusses des Mediums nutzbar ist.

2. Vorrichtung nach Anspruch 1,
   **dadurch gekennzeichnet,**
   **dass** es sich bei dem Durchflussmessgerät (1) um ein Clamp-On Durchflussmessgerät oder um ein Messgerät handelt, das in das Behältnis (2) einbringbar ist.

3. Vorrichtung nach Anspruch 1,
   **dadurch gekennzeichnet,**
   **dass** es sich bei dem ersten Taktgeber (12) um einen Oszillator handelt.

4. Vorrichtung nach Anspruch 1,
   **dadurch gekennzeichnet,**
   **dass** es sich bei dem zweiten Taktgeber (13) um einen Quarz handelt.

5. Vorrichtung nach Anspruch 1 oder 4,
   **dadurch gekennzeichnet,**
   **dass** die Regel-/Auswerteeinheit (11) dazu eingerichtet ist, den zweiten Taktgeber (13) inter-mittierend zu betreiben.

6. Vorrichtung nach Anspruch 1 oder 4,
   **dadurch gekennzeichnet,**
   **dass** der zweite Taktgeber (13) kontinuierlich betreibbar ist.

## Claims

1. Apparatus for determining and/or monitoring the volume flow and/or mass flow of a medium (4) which flows through a vessel (2) in a flow direction (S), with at least one ultrasonic transducer (5, 6), which transmits and/or receives ultrasonic measuring signals, and with a control/evaluation unit (11), which determines the volume flow and/or mass flow of the medium (4) in the vessel (2) using the ultrasonic measuring signals according to the time-of-flight principle or the Doppler principle, wherein a first clock (12) with a first clock rate (fFast) and a second clock (13) with a second clock rate (fSlow) are provided, wherein the first clock rate (fFast) of the first clock (12) is greater than the second clock rate (fSlow) of the second clock (13), and wherein the control/evaluation unit (11) is configured to operate the first clock (12) in an intermittent manner and wherein the control/evaluation unit (11) is clocked with the first clock rate for scanning the ultrasonic measuring signals for a time-of-flight measurement and a calculation of the flow of the medium, and wherein, in a rest phase, the control/evaluation unit (11) is clocked with the second clock rate, wherein the first clock is deactivated during the rest phase,
   **characterized in that**
   the control/evaluation unit (11) is configured to adapt the duration of a switch-on or measurement phase and/or the rest phase depending on the energy that is available, wherein the first clock rate (fFast) can be used to scan the ultrasonic measuring signals for a time-of-flight and a calculation of the flow of the medium.

2. Apparatus as claimed in Claim 1,
   **characterized in that**
   the flowmeter (1) is a clamp-on flowmeter or a measuring device that can be introduced into the vessel (2).

**3.** Apparatus as claimed in Claim 1,
**characterized in that**
the first clock (12) is an oscillator.

**4.** Apparatus as claimed in Claim 1,
**characterized in that**
the second clock (13) is a quartz.

**5.** Apparatus as claimed in Claim 1 or 4,
**characterized in that**
the control/evaluation unit (11) is configured to operate the second clock (13) intermittently.

**6.** Apparatus as claimed in Claim 1 or 4,
**characterized in that**
the second clock (13) can be operated continuously.


**Revendications**

**1.** Dispositif destiné à la détermination et/ou la surveillance du débit volumique et/ou massique d'un produit (4), qui traverse un réservoir (2) dans un sens d'écoulement (S), avec au moins un convertisseur à ultrasons (5, 6), qui émet et/ou reçoit des signaux de mesure ultrasonores, et avec une unité de régulation / d'exploitation (11), qui détermine le débit volumique et/ou massique du produit (4) dans le réservoir (2) au moyen des signaux de mesure ultrasonores d'après le principe de la différence du temps de propagation ou d'après le principe Doppler, une première horloge (12) avec une première cadence (fFast) et une deuxième horloge (13) avec une deuxième cadence (fSlow) étant prévues, la première cadence (fFast) de la première horloge (12) étant supérieure à la deuxième cadence (fSlow) de la deuxième horloge (13), et
l'unité de régulation / d'exploitation (11) étant configurée de telle sorte à exploiter la première horloge (12) de façon intermittente
et l'unité de régulation / d'exploitation (11) étant cadencée avec la première cadence pour l'échantillonnage des signaux de mesure ultrasonores pour une mesure du temps de propagation ainsi que pour un calcul du débit de produit,
et l'unité de régulation / d'exploitation (11) étant cadencée, dans une phase de repos, avec la deuxième cadence, la première horloge étant désactivée pendant la phase de repos,
**caractérisé**
**en ce que** l'unité de régulation / d'exploitation (11) est configurée de telle sorte à adapter la durée d'une phase d'activation ou de mesure et/ou de la phase de repos en fonction d'une énergie disponible,
la première cadence (fFast) étant utilisable pour l'échantillonnage des signaux de mesure ultrasonores pour une mesure du temps de propagation ainsi que pour un calcul du débit du produit.

**2.** Dispositif selon la revendication 1,
**caractérisé**
**en ce que**, concernant le débitmètre (1), il s'agit d'un débitmètre clamp-on ou d'un appareil de mesure pouvant être monté dans le réservoir (2).

**3.** Dispositif selon la revendication 1,
**caractérisé**
**en ce que**, concernant la première horloge (12), il s'agit d'un oscillateur.

**4.** Dispositif selon la revendication 1,
**caractérisé**
**en ce que**, concernant la deuxième horloge (13), il s'agit d'un quartz.

**5.** Dispositif selon la revendication 1 ou 4,
**caractérisé**
**en ce que** l'unité de régulation / d'exploitation (11) est conçue de telle sorte à exploiter la deuxième horloge (13) de façon intermittente.

6. Dispositif selon la revendication 1 ou 4,
**caractérisé**
**en ce que** la deuxième horloge (13) peut être exploitée de façon continue.

[Fig. 001]

1/3

Fig. 1

[Fig. 002]

2/3

Fig. 2

Fig. 3

EP 1 743 142 B1

3/3

Fig. 4

11

EP 1 743 142 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0686255 B1
- US PS4484478 A
- US PS4598593 A
- WO 0070313 A
- EP 0249691 A1
- EP 0426309 A2